# EUROPEAN PATENT SPECIFICATION

(11) **EP 3 339 268 B1**
(45) Date of publication and mention of the grant of the patent: **06.04.2022**
(21) Application number: 17208958.3
(22) Date of filing: 20.12.2017
(51) Int. Cl.: C04B 28/24, C04B 30/02, C04B 18/02, C04B 20/10

(54) **METHOD FOR TREATING OF A PLANT-BASED MATERIAL AND MATERIAL PRODUCED BY THAT METHOD, INSULATION MATERIAL, COATING MATERIAL, AND A CORRESPONDING USE**
VERFAHREN ZUM BEHANDELN EINES MATERIALS AUF PFLANZENBASIS UND DAMIT HERGESTELLTES MATERIAL, DÄMMMATERIAL, BESCHICHTUNGSMITTEL SOWIE EINE ENTSPRECHENDE VERWENDUNG
PROCÉDÉ DE TRAITEMENT D'UN MATÉRIAU À BASE DE PLANTES ET MATÉRIAU PRODUIT PAR CE PROCÉDÉ, MATÉRIAU ISOLANT, MATÉRIAU DE REVÊTEMENT ET UTILISATION CORRESPONDANTE

(30) Priority: 21.12.2016 DE 102016125148
(43) Date of publication of application: 27.06.2018
(73) Proprietor: SAINT-GOBAIN ISOVER, 92400 Courbevoie (FR)
(72) Inventor: Hünig, Hagen, 68549 Ilvesheim (DE); Passon, Ulrich, 76227 Karlsruhe (DE); Bugert, Karl-Hans, 68519 Viernheim (DE)
(74) Representative: Kuhnen & Wacker Patent- und Rechtsanwaltsbüro PartG mbB

(56) References cited:
- EP-A1- 2 818 457
- EP-A2- 2 295 659
- CN-A- 102 152 356
- CN-U- 203 737 936
- DE-A1-102011 016 562
- DE-C- 812 779
- JP-A- H05 194 876
- US-A- 6 000 457
- QUAN ZHU ET AL: "Modified Silica Sol Coatings for Highly Hydrophobic Cotton and Polyester Fabrics Using a One-Step Procedure", INDUSTRIAL & ENGINEERING CHEMISTRY RESEARCH, vol. 50, no. 10, 18 May 2011 (2011-05-18), pages 5881-5888, XP055473199, ISSN: 0888-5885, DOI: 10.1021/ie101825d
- Evonik: "Paper Sizing with AEROSIP fumed silica dispersions", , 31 July 2015 (2015-07-31), Retrieved from the Internet: URL:https://www.aerosil.com/product/aerosi l/downloads/ti-1322-paper-sizing-with-aero disp-dispersions-en.pdf [retrieved on 2019-08-20]

## Description

The invention relates to a method for treating of a plant-based material according to claim 1, a material according to claim 6, a coating material according to claim 9, and a corresponding use according to claim 11.

### Prior art

The basic problem of insulation materials based on ecological materials, in particular based on plants, is the water uptake by depositing into the cellulose structure which is intrinsic for these materials. If bulrush (Typha angustifolia) is used as an insulation material, the water uptake can make up to the five-fold of the tare weight or original weight. From this, negative consequences result, in particular the loss or at least the reduction of the insulation effect and a reduction of the mechanical stability due to an impairment of the effect of the binding material or binding agent. This makes the use of such insulation materials for the manufacturing of insulation panels impossible or at least, tremendously limits their suitability for said purpose.

In order to solve this problem, in the prior art, for example in the patent document EP 2 295 659 B1, it is suggested to finely comminute the aerial leaf mass of the bulrush prior to bonding, and to further remove the dust portion from the comminuted plant material. Namely, according to the teaching of this patent, the swelling characteristics of a pressed body based on bulrush very much depends on the degree of fragmentation of the raw material, which is surprisingly.

However, this method is elaborately, since in this practice, comminuting is limited to narrow limits. Moreover, the dust portion is gained separately, it has to be disposed separately or has to be used in a different way.

Relevant materials based on comminuted plant material or coating materials and corresponding manufacturing methods are known from the following prior art documents: QUAN ZHU ET AL, "Modified Silica Sol Coatings for Highly Hydrophobic Cotton and Polyester Fabrics Using a One-Step Procedure", INDUSTRIAL & ENGINEERING CHEMISTRY RESEARCH, (20110518), vol. 50, no. 10, doi:10.1021/ie101825d, ISSN 0888-5885, pages 5881 - 5888, XP055473199; JP H05 194 876; DE 812 779 C; CN 203 737 936 U; EP 2 295 659 A2; EP 2 818 457 A1; DE 10 2011 016 562 A1; US 6 000 457 A; and Evonik: "Paper Sizing with AEROSIP fumed silica dispersions", 31 July 2015, URL:https://www.aerosil.com/producVaerosiI/downloads/ti-1322-paper-sizing-with-aerodisp-dispersionsen.pdf.

### Object of the invention

It is therefore an object of the present invention, to provide a method for treating of a plant-based material, and a material wherein the water uptake of said material is hindered or at least reduced. Moreover, according to the invention, a long-term mechanical stability and a high insulation effect of the same material should be ensured.

### Definitions

According to the present invention, the term "inorganic" as referring to the coating material means that the coating material substantially or completely consists of inorganic substances. Therein, "substantially or completely of inorganic substances" means that the coating material contains non-mineral and/or organic compounds in a mass portion of less than 5 mass percent, preferably less than 2 mass percent, preferably less than 1 mass percent, preferably less than 0.5 mass percent, in particular less than 0.1 mass percent.

Within the is application, the term "comminute" includes cut, fragment, crush, chop, masticate, disintegrate, crumble, break, grind, mill, and/or shred, but is not limited to one of these.

### Summary of the invention

The object as described above is solved by the subject-matter of the independent claims.

Thus, a method for treating of a material (M), preferably in a method for producing an insulation material (D), is suggested, wherein the method includes at least the steps:
(a) providing the material (M) as a starting material;
   wherein the material (M) contains or consists of a comminuted plant material, wherein the comminuted plant material is bulrush which is Typha angustifolia or wood fibers suitable for producing soft wood fiber insulation plates;
(b) applying an inorganic coating material (C) to the material (M), preferably coating the material (M) with an inorganic coating material (C);
   wherein the coating material (C) has a pH-value of < 10; and
(c) drying of the material (M) obtained in step (b) until a degree of dryness is achieved to be between the constant mass and 5 mass % above the constant mass, preferably until the constant mass is achieved. Therein, drying is preferably carried out at the temperature, preferably at the maximum of 120°C, at which the material is thermally not affected adversely. According to the invention, the drying process does not have to be conducted until the constant mass is completely achieved, a small amount of residual humidity is tolerable with the inventive method. Thus, drying of the material (M) up to 5 mass percent about the constant mass is sufficient.

The coating material (C) has at least the following compounds:
a first compound (C1), which functions as a supporting structure, consisting of at least one component, selected from the group consisting of zircon powder (CAS 14940-68-2), freshly precipitated aluminum hydroxide, freshly precipitated titanium dioxide, a colloid dispersion of titanium dioxide, aluminum hydroxide in the form of Hydrargillit (CAS 21645-51-2), and titanium dioxide (CAS 13463-67-7); and
a second compound (C2), which functions as a stabilizer, consisting of silicic acid, preferably silica sol.

The mass portion (referring to the dry mass) of the plant material, preferably bulrush (Typha angustifolia), of the inventive material (M) as the starting material is at least 80 %, preferably at least 85 %, preferably at least 90 %, in particular at least 95 %. According to the invention, it is sufficient to apply the coating material (C) in a mass portion of a maximum of 10 %, preferably a maximum of 8 %, referring to the material (M) as the starting material.

Despite the fact, that a method is known from the prior art, in particular from the patent DE 812 779, in which rot, spoilage and maybe climactic influences are supposed to be prevented due to the application of a coating or binding material based on clay or silicic acid. However, according to a finding of the present inventors, the high pH-value of the binding material as suggested therein inevitably causes a damage of the cellulose structure of the vegetable insulation material, which has a negative impact on the mechanical long-term stability and the insulation effect, and causes an increase of the water uptake. Thus, such a treatment of the insulation material with the coating or binding material as suggested therein, does not appear to be suitable to solve the object of the invention.

In contrast, the inventors of the present invention have found, that by applying an inorganic coating material to a plant-based material, preferably coating a plant-based material with an inorganic coating material, with the coating material having a pH-value of below 10, beside a decreased amount of water uptake a high insulation effect (heat conductivity < 45 mW/(m·K)) can be achieved by the method according to the invention. Further, due to the coating, a mechanical stabilization of the structure is achieved. It is a belief of the inventors, that the coating material probably causes a barrier in the kind of a protection layer, which hinders or reduces the penetration of water into the starting material. On the other hand, it also leads to a mechanical support of the structure of the comminuted plant material.

Even further, the application of the coating material to the material in the form of a coating allows the application of tremendously lower amounts of the binding material, since the water uptake is hindered by the coating. Thus, the consumption of the binding material and the manufacturing costs can be reduced. Therein, the amount of binding material to be applied can be reduced to such an extent, that, in case such a small amount of binding material would be applied to the uncoated plant materials, the binding effect would be too low, so that no stable connection or bond of the plant materials would be achieved, but they would rather fall apart.

Further, the method according to the invention does not require the application of a high pressure (such as 6 bars, up to 60 bars) during the step of pressing the plant components, as is suggested in e.g., patent DE 812 779. In addition, due to avoiding the application of such pressure values a damage of the structure of the plant components, in particular of the bulrush granulates, can be avoided. According to the invention, the application of pressure or of a pressing step can be limited to the act of shaping or forming. In this context it is to mention that due to the dispensability of high pressures during pressing, the invention for the first time provides materials or insulation materials which have a density of < 150 kg/m³, preferably < 120 kg/m³, preferably < 80 kg/m³ und in particular < 60 kg/m³. In contrast, conventional insulation materials made from Typha usually have a density of 200 kg/m³ or more. Due to the low density new fields of application are achieved in areas, in which the installation of high masses is critical, e.g., for static reasons. Moreover, the transportation of the materials to the operation site is less costly and causes less damage to the environment. Further, tremendous advantages in terms of handling or when using the products for insulation purposes result due to the lower raw density and the lower weight caused thereby. The particular raw density depends on the specific product, that is, on the proposed application thereof. Generally speaking, within this raw density range, lowering of the raw density causes an increase of the heat conductivity.

Preferred embodiments of the inventive method are subject-matter of the dependent claims.

Thus, the application in step (b) may advantageously be conducted by impregnating of the material (M) with the coating material (C) or dipping the material (M) into the coating material (C). Alternatively, the application can be conducted by drum coating.

By the proposed application method, the material (M) can be coated homogeneously and to a sufficient extent, so that a high degree of protection of the plant starting material can be ensured.

The method may further include at least one of the steps:
(d) applying a binding material or binding agent (B) to the material (M) obtained in step (c);
(e) allowing to harden or drying of the material (M) obtained in step (d), until the degree of dryness is achieved to be between the constant mass and 5 mass % above the constant mass; preferably until the constant mass is achieved; and/or
(f) customizing, preferably comminuting or cutting to size, of the material obtained in step (e), thereby obtaining the insulation material (D).

Thus, in the further steps the material (M) may be prepared in a simple manner for its final disposition as insulation material (D). When allowing the material (M) to harden or drying of the material (M) according to step (e), a limited amount of residual humidity can be tolerated, in analog manner to the drying step according to step (c) as described above. In order to avoid sticking of the material (M) or of the insulation material (D) piled up on top of each other, a hardening process can be conducted until the stickiness of the applied binding material is lost, in order to avoid a decrease of the mechanical stability of the structure. In case of binding material systems which tend to stick, the hardening process may be conducted until a swelling effect is negligible.

A further advantage results from the application of the coating material according to the invention: the binding material has to be applied in a mass portion of 50 % or more in the materials/insulation materials known from the prior art in order to produce a stable composite. In contrast, according to the invention, it is possible to reduce the required mass portion of the binding material to 20 % or less, preferably to 10% or less, preferably to 7% or less, due to the application of the coating material. The inventers suppose, that due to the existence of a coating on the starting material with the coating consisting of the coating material, not only humidity, but also the binding material is hindered to penetrate into the inner of the plant material, wherein the binding material comes in contact with the material in the course of the extended variant of the manufacturing method (cf. step (d)). This might be an explanation for the low demand of binding material according to the invention. Surprisingly, a sufficient bonding of the material and/or of the insulation material produced thereby is achieved despite the low portion of binding material applied.

In the method according to the invention, the coating material (C) may further contain a third compound (C3), which functions as an accelerator or an activator, consisting of one component, selected from the group consisting of zirconium carbonate (CAS 36577-48-7), zirconium carbonate basic hydrate (CAS 57219-64-4), aluminum carbonate basic hydrate (CAS 1339-92-0), und titanium carbonate.

Moreover, the method according to the invention may further be limited such that the binding material (B) contains of at least one of the following compounds:
an aqueous dispersion of polymer on the base of latex;
a wood glue, preferably on the basis of polyvinyl acetate, in particular according to DIN/EN 204 (D3);
magnesite;
bakelite;
a PFU resin; and/or
a melamine resin.

Further, a material is suggested which preferably is produced according to the inventive method. The material contains a comminuted plant (or vegetable) material and an inorganic coating material (C), and the comminuted plant material is bulrush which is Typha angustifolia or wood fibers. Moreover, the material may contain a binding material (or binding agent) (B). Therein, the coating material (C) has a pH-value of below 10.

The coating material (C) has at least the following compounds:
a first compound (C1), which functions as a supporting structure, consisting of one component, selected from the group consisting of zircon powder (CAS 14940-68-2), freshly precipitated aluminum hydroxide, freshly precipitated titanium dioxide, a colloid dispersion of titanium dioxide, aluminum hydroxide in the form of Hydrargillit (CAS 21645-51-2), and titanium dioxide (CAS 13463-67-7); and
a second compound (C2), which functions as a stabilizer, consisting of silicic acid, preferably silica sol.

Preferably, the coating material (C) may further contain a third compound (C3), which functions as an accelerator (or an activator), consisting of one component, selected from the group consisting of zirconium carbonate (CAS 36577-48-7), zirconium carbonate basic hydrate (CAS 57219-64-4), aluminum carbonate basic hydrate (CAS 1339-92-0), und titanium carbonate.

Moreover, the material according to the invention may further be limited such that the binding material (B) contains at least one of the following compounds:
an aqueous dispersion of polymer on the base of latex;
a wood glue, preferably on the basis of polyvinyl acetate, in particular according to DIN/EN 204 (D3);
magnesite;
bakelite;
a PFU resin; and/or
a melamine resin.

The binding materials (B) as described above are characterized by a broad range of applicability and are easily combinable with the coating material (C) according to the invention. For the sake of ecological sustainability, systems based on glue or latex as well as magnesite are preferred.

Further, a coating material (C) for treating, in particular coating, of a material (M), preferably in a method for manufacturing of an insulation material (D), is suggested. Therein, the material (M) contains or consists of a comminuted plant material, preferably bulrush which is Typha angustifolia. Further, the coating material (C) contains at least the following compounds:
a first compound (C1), which functions as a supporting structure, consisting of one component, selected from the group consisting of zircon powder (CAS 14940-68-2), freshly precipitated aluminum hydroxide, freshly precipitated titanium dioxide, a colloid dispersion of titanium dioxide, aluminum hydroxide in the form of Hydrargillit (CAS 21645-51-2), and titanium dioxide (CAS 13463-67-7);
a second compound (C2), which functions as a stabilizer, consisting of silicic acid, preferably silica sol; and
a third compound (C3), which functions as an accelerator, consisting of one component, selected from a group consisting of: zirconium carbonate (CAS 36577-48-7), zirconium carbonate basic hydrate (CAS 57219-64-4), aluminum carbonate basic hydrate (CAS 1339-92-0), and titanium carbonate.

Therein, the coating material (C) has a pH value of below 10.

As regards to coating material (C) it is particular preferred, if the first compound (C1) is zircon powder and the second compound (C2) is silica sol. In this context it is particular preferred, but not required, if the coating material (C) further contains zirconium carbonate as the third compound (C3). The substances mentioned for this specific composition are pretty well available in the market and can be purchased at reasonable costs.

In a preferred embodiment, the coating material (C) may contain non-mineral or organic compounds in a mass portion of less than 5 mass %, preferably less than 2 mass %, preferably less than 1 mass %, preferably less than 0.5 mass %, in particular less than 0.1 mass %.

In a further preferred embodiment the sum of the mass portions of the first compound (C1) and the second compound (C2) may be more than 95 mass %, preferably more than 98 mass %, preferably more than 99 mass %, in particular more than 99.5 mass %, referring to the coating material (C).

In a further preferred embodiment the sum of the mass portions of the first compound (C1), the second compound (C2), and the third compound (C3) may be more than 95 mass %, preferably more than 98 mass %, preferably more than 99 mass %, in particular more than 99.5 mass %, referring to the coating material (C).

Moreover, the use of the coating material (C) as defined above is suggested for coating of a material (M) in order to hinder the water uptake by the material (M) and to achieve a heat conductivity of the coated material (M) of less than 45 mW/(m·K), preferably in a method for manufacturing of an insulation material (D). Therein, the material (M) contains a plant material, preferably bulrush (Typha angustifolia). The plant material is comminuted.

Therein, the coating material (C) contains at least the following compounds:
a first compound (C1), which functions as a supporting structure, consisting of one component, selected from the group consisting of zircon powder, freshly precipitated aluminum hydroxide, freshly precipitated titanium dioxide, a colloid dispersion of titanium dioxide, aluminum hydroxide in form of Hydrargillit (CAS 21645-51-2), and titanium dioxide (CAS 13463-67-7); and
a second compound (C2), which functions as a stabilizer, consisting of silicic acid, preferably silica sol;
wherein the coating material (C) has a pH value of below 10.

In a preferred embodiment of the inventive use, the coating material (C) may further contain:
a third compound (C3), which functions as an accelerator, consisting of one component, selected from a group consisting of: zirconium carbonate (CAS 36577-48-7), zirconium carbonate basic hydrate (CAS 57219-64-4), aluminum carbonate basic hydrate (CAS 1339-92-0), and titanium carbonate; and
preferably, non-mineral or organic compounds in a mass portion of less than 5 mass %.

Finally, an insulation material (D) is suggested which is manufactured by a method, which includes the method according to the invention. In addition or alternatively to this, the insulation material (D) may contain the material (M) according to the invention.

The insulation material (D) is preferably characterized by having a raw density of < 150 kg/m³ according to DIN EN 1602:2013-05 and/or a heat conductivity λ₁₀ of < 55 mW/(m·K), preferably < 50 mW/(m·K), in particular < 45 mW/(m·K), according to DIN EN 12667:2001-05, and/or a pressure stability of > 60 kPa, preferably > 80 kPa, according to DIN EN 826:2013-05.

The advantages of the inventive material and of the insulation material manufactured thereby, of the coating material and of the use are analog to those of the method according to the invention.

### Exemplary embodiments of the invention

For the exemplary embodiments of the invention the following substances were used:
bulrush, comminuted to a length of approximately 10 cm (Typha angustifolia), dried;
silica sol Levasil 200/40 (Akzo Nobel, 40 % solids);
zircon powder (CAS 14940-68-2 d₅₀ 1 µm);
zirconium carbonate basic hydrate (CAS 57219-64-4);
wood glue waterproof according to DIN/EN 204 (D3) (e.g. "Ponal Fugenleim" Henkel KGaA 50%);
an aqueous emulsion of polydimethylsiloxane (BS5137 Wacker 50%).

Determination of the water uptake capacity of untreated bulrush

Approximately 1.5 g of untreated, comminuted bulrush was filled into a 250 mL-plastic bottle, 50 g of water were added, and thoroughly mixed for 5 minutes, respectively. The soaked material was removed, water retaining to the surface was carefully removed, and then dried at 105 °C until constant mass. The values are presented in Table 1.

**Table 1: water uptake of untreated bulrush**

| sample | weight of dry sample [g] | weight of soaked sample [g] | weight of dried sample after 5 h at 105 °C [g] | weight of dried sample after 18 h at 105°C [g] | (weight of soaked sample - weight of dried sample) / weight of dried sample (after 18 h) |
|---|---|---|---|---|---|
| 1 | 1.6862 | 3.8907 | 0.9088 | 0.9005 | 3.3 |
| 2 | 1.4597 | 5.0379 | 1.0505 | 1.0413 | 3.8 |
| 3 | 1.5082 | 4.7166 | 0.9356 | 0.9264 | 4.1 |

The relative water uptake results in a factor of 3.7 in average. Thus, the water uptake of comminuted, untreated bulrush is high.

Determination of the water uptake capacity of material pretreated according to the invention

In a 1 L-plastic bottle 94 g of water were provided and 5 g of silica sol (as the second compound (C2) of the coating material (C)) were added. After homogenization 2 g of zirconium powder (as the first component (C1) of the coating material (C)) and 120 mg of zirconium carbonate basic hydrate (as optional third component (C3) of the coating material (C)) were added and again homogenized. To this dispersion, 20 g untreated, comminuted bulrush was added, and the mixture was thoroughly shaken for approximately 5 minutes. The material was removed from the bottle, water retaining to the surface was carefully removed, and then dried at 105 °C until constant mass. Approximately 1.5 g of the pretreated bulrush as obtained in this manner were filled into a 250 mL-plastic bottle, approximately 50 g of water were added and thoroughly shaken for approximately 5 minutes. The soaked material was removed from the bottle, water retaining to the surface was carefully removed, and then dried at 105 °C until constant mass. The values are presented in Table 2.

**Table 2: water uptake of pretreated bulrush**

| sample | weight of soaked sample [g] | weight of dried sample after 18 h at 105 °C [g] | (weight of soaked sample - weight of dried sample) / weight of dried sample (after 18 h) |
|---|---|---|---|
| 1 | 3.3467 | 1.3862 | 1.4 |
| 2 | 2.7702 | 1.5380 | 0.8 |

The relative water uptake results in a factor of 1.1 in average.

Compared to the average of a 3.7-fold uptake of water referring to the original weight in case of the untreated bulrush, the water uptake is reduced to the 1.1-fold of the original weight due to the inventive coating. This means that due to the coating according to the invention a reduction of the water uptake of approximately 70 % can be achieved.

Manufacturing of plate-shaped insulation material samples for the determination of the heat conductivity according to DIN EN 12667:2001-05.

Three recipe batches for respectively 1,000 g of untreated bulrush having a target content of binding material of 5 %, 10 %, and 20 % were prepared. In order to do so, first, 3,000 g of water were filled into a 5 L-container and after each other and under stirring, the batch amounts for preparing the binding material dispersion as presented in Table 3 were added.

**Table 3: composition of the binding material dispersions**

| | unit | exemplary embodiment 1 | exemplary embodiment 2 | exemplary embodiment 3 |
|---|---|---|---|---|
| binding material (target value) | [mass %] | 5 | 10 | 20 |
| water | [g] | 3,000 | 3,000 | 3,000 |
| wood glue | [g] | 90.5 | 180.3 | 360 |
| silicon emulsion (as defoamer) | [g] | 6 | 6 | 6 |

Previously, the samples of bulrush were pretreated according to the invention, such as described in the preceding example. In a mixer having a volume of 130 L, 1000 g of the pretreated bulrush were submitted, respectively, and the binding material dispersion was added under permanent circulation. After completing the addition, circulation was continued for another 15 minutes. Thereafter, the material treated as such was transferred into a mesh form and dried at 105°C until constant mass.

The insulation-material plates produced in this way were removed and customized to an etched lengths of 400 x 400 mm. The exemplary insulation materials produced in this way were investigated as regards different parameters. The results of the measurements are presented in Table 4. Beside the heat conductivity according to DIN EN 12667:2001-05 also the pressure stability according to DIN EN 826:2013-05 and the low-density according to DIN EN 823:2013-05 were determined, the results of which are also presented in Table 4. For comparison, the measured values of a commercially available plate having a magnesit binding material (mass portion of 50 %) are presented (comparative example, not according to the invention).

**Table 4: measured values of heat conductivity λ₁₀ according to DIN EN 12667:2001-05 and of pressure stability according to DIN EN 826:2013-05**

| parameter | unit | exemplary embodiment 1 | exemplary embodiment 2 | exemplary embodiment 3 | comparative example |
|---|---|---|---|---|---|
| mass | [g] | 750 | 612 | 789 | 3962 |
| length | [mm] | 400 | 400 | 400 | 485 |
| width | [mm] | 400 | 400 | 400 | 500 |
| installed thickness | [mm] | 31.4 | 48.4 | 41.5 | 65.6 |
| raw density | [kg/m³] | 149.3 | 79.0 | 118.8 | 249.1 |
| λ₁₀ | [mW/(m·K)] | 44.1 | 41.9 | 41.3 | 55.0 |
| pressure stability | [kPa] | 102.6 | 65.3 | 85.3 | > 500^{∗} |

| | | | | | |
|---|---|---|---|---|---|
| ^{∗} Exceeding measurement range (20 kN load cell) | | | | | |

The exemplary embodiments 1 to 3 according to the invention have heat conductivities of below 45 mW/mK at raw densities of below 150 kg/m³. Therefore, the insulation materials according to the invention achieve at the same time an improved insulation effect having lower raw densities as compared to conventional materials. Moreover, the measured pressure stability of more than 60 kPa are sufficient for typical applications.

Consequently, the materials as treated according to the invention and the insulating materials produced thereby have a water uptake which is substantially reduced. In addition, the resulting insulation materials achieve a sufficiently high mechanical stability and a high insulation effect, which is further improved as compared to the known insulating materials based on Typha.

## Claims

1. Method for treating of a material (M), preferably in a method for producing an insulation material (D);
wherein the method includes at least the steps:
(a) providing the material (M) as a starting material;
wherein the material (M) contains or consists of a comminuted plant material, wherein the comminuted plant material is bulrush which is Typha angustifolia or wood fibers;
(b) applying an inorganic coating material (C) to the material (M), preferably coating the material (M) with an inorganic coating material (C);
wherein the coating material (C) has a pH-value of < 10; and
(c) drying of the material obtained in step (b) until a degree of dryness is achieved to be between the constant mass and 5 mass % above the constant mass, preferably until the constant mass is achieved;
**characterized in that** the coating material (C) at least has the following compounds:
a first compound (C1), which functions as a supporting structure, consisting of one component, selected from the group consisting of zircon powder, freshly precipitated aluminum hydroxide, freshly precipitated titanium dioxide, a colloid dispersion of titanium dioxide, aluminum hydroxide in form of Hydrargillit (CAS 21645-51-2), and titanium dioxide (CAS 13463-67-7); and
a second compound (C2), which functions as a stabilizer, consisting of silicic acid, preferably silica sol.

2. Method according to claim 1, **characterized in that** the application in step (b) is conducted by impregnating of the material (M) with the coating material (C), in particular dipping the material (M) into the coating material (C); or
the application in step (b) is conducted by drum coating.

3. Method according to claim 1 or 2, **characterized in that** the method further includes at least one of the steps:
(d) applying a binding material (B) to the material obtained in step (c);
(e) allowing to harden or drying of the material obtained in step (d), until the degree of dryness is achieved to be between the constant mass and 5 mass % above the constant mass, preferably until the constant mass is achieved; and/or
(f) customizing, preferably comminuting to size, of the material obtained in step (e), thereby obtaining the insulation material (D).

4. Method according to one of claims 1 to 3, **characterized in that**, the coating material (C) contains a third compound (C3), which functions as an accelerator, consisting of one component, selected from the group consisting of: zirconium carbonate (CAS 36577-48-7), zirconium carbonate basic hydrate (CAS 57219-64-4), aluminum carbonate basic hydrate (CAS 1339-92-0), and titanium carbonate.

5. Method according to claim 3, **characterized in that** the binding material (B) contains at least one of the following compounds:
an aqueous dispersion of polymer on the base of latex;
a wood glue, preferably on the basis of polyvinyl acetate, in particular according to DIN/EN 204 (D3);
magnesite;
bakelite;
a PFU resin; and/or
a melamine resin.

6. Material,
preferably manufactured by the method according to one of claims 1 to 5; wherein the material contains:
a comminuted plant material;
an inorganic coating material (C); and
preferably a binding material (B);
wherein the comminuted plant material is bulrush which is Typha angustifolia or wood fibers; and
wherein the coating material (C) has a pH-value of below 10;
**characterized in that** the coating material (C) at least has the following compounds:
a first compound (C1), which functions as a supporting structure, consisting of one component, selected from the group consisting of zircon powder, freshly precipitated aluminum hydroxide, freshly precipitated titanium dioxide, a colloid dispersion of titanium dioxide, aluminum hydroxide in form of Hydrargillit (CAS 21645-51-2), and titanium dioxide (CAS 13463-67-7); and
a second compound (C2), which functions as a stabilizer, consisting of silicic acid, preferably silica sol.

7. Material according to claim 6, **characterized in that**, the coating material (C) contains a third compound (C3), which functions as an accelerator, consisting of one component, selected from the group consisting of: zirconium carbonate (CAS 36577-48-7), zirconium carbonate basic hydrate (CAS 57219-64-4), aluminum carbonate basic hydrate (CAS 1339-92-0), and titanium carbonate.

8. Material according to one of claims 6 or 7, **characterized in that** the binding material (B) contains at least one of the following compounds:
an aqueous dispersion of polymer on the base of latex;
a wood glue, preferably on the basis of polyvinyl acetate, in particular according to DIN/EN 204 (D3);
magnesite;
bakelite;
a PFU resin; and/or
a melamine resin.

9. A coating material (C) for treating, in particular coating, of a material (M), preferably in a method for manufacturing of an insulation material (D);
wherein the material (M) contains or consists of a comminuted plant material, preferably bulrush which is Typha angustifolia;
wherein the coating material (C) contains at least the following compounds:
a first compound (C1), which functions as a supporting structure, consisting of one component, selected from the group consisting of zircon powder, freshly precipitated aluminum hydroxide, freshly precipitated titanium dioxide, a colloid dispersion of titanium dioxide, aluminum hydroxide in form of Hydrargillit (CAS 21645-51-2), and titanium dioxide (CAS 13463-67-7);
a second compound (C2), which functions as a stabilizer, consisting of silicic acid, preferably silica sol; and
a third compound (C3), which functions as an accelerator, consisting of one component, selected from a group consisting of: zirconium carbonate (CAS 36577-48-7), zirconium carbonate basic hydrate (CAS 57219-64-4), aluminum carbonate basic hydrate (CAS 1339-92-0), and titanium carbonate;
wherein the coating material (C) has a pH value of below 10.

10. Coating material (C) according to claim 9, **characterized in that** the coating material (C) contains non-mineral or organic compounds in a mass portion of less than 5 mass %, preferably less than 2 mass %, preferably less than 1 mass %, preferably less than 0.5 mass %, in particular less than 0.1 mass %.

11. Use of a coating material (C) for coating of a material (M) in order to hinder the water uptake by the material (M) and to achieve a heat conductivity of the coated material (M) of less than 45 mW/(m·K), preferably in a method for manufacturing of an insulation material (D);
wherein the material (M) contains a plant material, preferably bulrush which is Typha angustifolia;
wherein the plant material is comminuted; and
wherein the coating material (C) contains at least the following compounds:
a first compound (C1), which functions as a supporting structure, consisting of one component, selected from the group consisting of zircon powder, freshly precipitated aluminum hydroxide, freshly precipitated titanium dioxide, a colloid dispersion of titanium dioxide, aluminum hydroxide in form of Hydrargillit (CAS 21645-51-2), and titanium dioxide (CAS 13463-67-7); and
a second compound (C2), which functions as a stabilizer, consisting of silicic acid, preferably silica sol;
wherein the coating material (C) has a pH value of below 10.

12. Use according to claim 11, **characterized in that** the coating material (C) further contains:
a third compound (C3), which functions as an accelerator, consisting of one component, selected from a group consisting of: zirconium carbonate (CAS 36577-48-7), zirconium carbonate basic hydrate (CAS 57219-64-4), aluminum carbonate basic hydrate (CAS 1339-92-0), and titanium carbonate; and
preferably, non-mineral or organic compounds in a mass portion of less than 5 mass %.

## Patentansprüche

1. Verfahren zum Behandeln eines Materials (M), vorzugsweise in einem Verfahren zur Herstellung eines Dämmmaterials (D);
wobei das Verfahren wenigstens die Schritte umfasst:
(a) Bereitstellen des Materials (M) als ein Ausgangsmaterial;
wobei das Material (M) ein zerkleinertes pflanzliches Material enthält oder daraus besteht, wobei es sich bei dem zerkleinerten pflanzlichen Material um Rohrkolben, wobei es sich um Typha angustifolia handelt, oder um Holzfasern handelt;
(b) Beaufschlagen des Materials (M) mit einem anorganischen Beschichtungsmaterial (C), vorzugsweise Beschichten des Materials (M) mit einem anorganischen Beschichtungsmittel (C);
wobei das Beschichtungsmittel (C) einen pH-Wert von < 10 aufweist; und
(c) Trocknen des in Schritt (b) erhaltenen Materials bis zum Erreichen eines Trocknungsgrades zwischen der Massekonstanz und 5 Massenprozent über der Massekonstanz, vorzugsweise bis zur Massekonstanz;
**dadurch gekennzeichnet, dass** das Beschichtungsmittel (C) wenigstens die nachfolgenden Bestandteile aufweist:
einen ersten Bestandteil (C1), welcher als ein Stützgefüge dient, bestehend aus einer Komponente, ausgewählt aus einer Gruppe, bestehend aus Zirkonmehl, frisch gefälltem Aluminiumhydroxid, frisch gefälltem Titandioxid, einer Titandioxid-Kolloiddispersion, Aluminiumhydroxid in Form von Hydrargillit (CAS 21645-51-2), und Titandioxid (CAS 13463-67-7); und
einen zweiten Bestandteil (C2), welcher als Stabilisator dient, bestehend aus Kieselsäure, vorzugsweise Kieselsol.

2. Verfahren nach Anspruch 1, **dadurch gekennzeichnet, dass** das Beaufschlagen in Schritt (b) durch Tränken des Materials (M) mit dem Beschichtungsmittel (C), insbesondere Eintauchen des Materials (M) in das Beschichtungsmittel (C) erfolgt; oder
das Beaufschlagen in Schritt (b) durch Trommelbeschichten erfolgt.

3. Verfahren nach Anspruch 1 oder 2, **dadurch gekennzeichnet, dass** das Verfahren ferner wenigstens einen der Schritte umfasst:
(d) Beaufschlagen des in Schritt (c) erhaltenen Materials (M) mit einem Bindemittel (B);
(e) Aushärten lassen oder Trocknen des in Schritt (d) erhaltenen Materials (M) bis zum Erreichen des Trocknungsgrades zwischen der Massekonstanz und 5 Massenprozent über der Massekonstanz, vorzugsweise bis zur Massekonstanz; und/oder
(f) Konfektionieren, vorzugsweise Zuschneiden, des in Schritt (e) erhaltenen Materials (M), wodurch das Dämmmaterial (D) erhalten wird.

4. Verfahren nach einem der Ansprüche 1 bis 3, **dadurch gekennzeichnet, dass** das Beschichtungsmaterial (C) einen dritten Bestandteil (C3) enthält, der als ein Beschleuniger dient, welcher aus einer Komponente, ausgewählt aus der Gruppe, bestehend aus: Zirkoniumcarbonat (CAS 36577-48-7), basischem Zirkoniumhydroxycarbonat (CAS 57219-64-4), basischem Aluminiumhydroxycarbonat (CAS 1339-92-0) und Titancarbonat, besteht.

5. Verfahren nach Anspruch 3, **dadurch gekennzeichnet, dass** das Bindematerial (B) wenigstens einen von den folgenden Bestandteilen enthält:
eine wässrige Dispersion aus Polymer auf der Basis von Latex;
einen Holzleim, vorzugsweise auf der Basis von Polyvinylacetat, insbesondere nach DIN/EN 204 (D3);
Magnesit;
Bakelit;
ein PFU-Harz; und/oder
ein Melaminharz.

6. Material,
vorzugsweise hergestellt mit dem Verfahren nach einem der Ansprüche 1 bis 5; wobei das Material enthält:
ein zerkleinertes pflanzliches Material;
ein anorganisches Beschichtungsmittel (C); und
vorzugsweise ein Bindemittel (B);
wobei es sich bei dem zerkleinerten pflanzlichen Material um Rohrkolben, wobei es sich um Typha angustifolia handelt, oder Holzfasern handelt ist; und
wobei das Beschichtungsmittel (C) einen pH-Wert von < 10 aufweist;
**dadurch gekennzeichnet, dass** das Beschichtungsmaterial (C) wenigstens die nachfolgenden Bestandteile aufweist:
einen ersten Bestandteil (C1), welcher als ein Stützgefüge dient, bestehend aus einer Komponente, ausgewählt aus der Gruppe, bestehend aus Zirkonmehl, frisch gefälltem Aluminiumhydroxid, frisch gefälltem Titandioxid, einer Titandioxid-Kolloiddispersion, Aluminiumhydroxid in Form von Hydrargillit (CAS 21645-51-2), und Titandioxid (CAS 13463-67-7); und
einen zweiten Bestandteil (C2), welcher als ein Stabilisator dient, bestehend aus Kieselsäure, vorzugsweise Kieselsol.

7. Material nach Anspruch 6, **dadurch gekennzeichnet dass** das Beschichtungsmittel (C) einen dritten Bestandteil (C3) enthält, welcher als ein Beschleuniger dient, bestehend aus einer Komponente, ausgewählt aus der Gruppe, bestehend aus: Zirkoniumcarbonat (CAS 36577-48-7), basischem Zirkoniumhydroxycarbonat (CAS 57219-64-4), basischem Aluminiumhydroxycarbonat (CAS 1339-92-0) und Titancarbonat.

8. Material nach einem der Ansprüche 6 bis 7, **dadurch gekennzeichnet, dass** das Bindemittel (B) wenigstens einen der nachfolgenden Bestandteile enthält:
eine wässrige Polymerdispersion auf der Basis von Latex;
einen Holzleim, vorzugsweise auf Polyvinylacetatbasis, insbesondere nach DIN/EN 204 (D3);
Magnesit;
Bakelit;
ein PFU-Harz; und/oder
ein Melamin-Harz.

9. Beschichtungsmittel (C) zum Behandeln, insbesondere Beschichten, eines Materials (M), vorzugsweise in einem Verfahren zur Herstellung eines Dämmmaterials (D);
wobei das Material (M) ein zerkleinertes pflanzliches Material, vorzugsweise Rohrkolben, wobei es sich um Typha angustifolia handelt, enthält oder daraus besteht;
wobei das Beschichtungsmittel (C) wenigstens die nachfolgenden Bestandteile enthält:
einen ersten Bestandteil (C1), welcher als ein Stützgefüge dient, bestehend aus einer Komponente, die ausgewählt ist aus der Gruppe, bestehend aus: Zirkonmehl,
frisch gefälltem Aluminiumhydroxid, frisch gefälltem Titandioxid, einer Titandioxid-Kolloiddispersion, Aluminiumhydroxid in Form von Hydrargillit (CAS 21645-51-2), und Titandioxid (CAS 13463-67-7); und
einen zweiten Bestandteil (C2), welcher als ein Stabilisator dient, bestehend aus Kieselsäure, vorzugsweise Kieselsol; und
einen dritten Bestandteil (C3), der als ein Beschleuniger fungiert, bestehend aus einer Komponente, die ausgewählt ist aus einer Gruppe, bestehend aus:
Zirkoniumcarbonat (CAS 36577-48-7), basischem Zirkoniumhydroxycarbonat (CAS 57219-64-4), basischem Aluminiumhydroxycarbonat (CAS 1339-92-0) und Titancarbonat;
wobei das Beschichtungsmittel (C) einen pH-Wert von < 10 aufweist.

10. Beschichtungsmittel (C) nach Anspruch 9, **dadurch gekennzeichnet, dass** das Beschichtungsmittel (C) nicht-mineralische oder organische Bestandteile in einem Massenanteil von weniger als 5 Massenprozent, vorzugsweise weniger als 2 Massenprozent, vorzugsweise weniger als 1 Massenprozent, vorzugsweise weniger als 0,5 Massenprozent, insbesondere weniger als 0,1 Massenprozent, enthält.

11. Verwendung des Beschichtungsmittels (C) zum Beschichten eines Materials (M), um die Wasseraufnahme durch das Material (M) zu verhindern und um eine Wärmeleitfähigkeit des beschichteten Materials (M) von weniger als 45 mW/(m· K), zu erreichen, vorzugsweise in einem Verfahren zur Herstellung eines Dämmmaterials (D);
wobei das Material (M) ein pflanzliches Material, vorzugsweise Rohrkolben, wobei es sich um Typha angustifolia handelt, enthält;
wobei das pflanzliche Material zerkleinert ist; und
wobei das Beschichtungsmittel (C) wenigstens die nachfolgenden Bestandteile aufweist:
einen ersten Bestandteil (C1), welcher als ein Stützgefüge dient, bestehend aus einer Komponente, welche ausgewählt ist aus der Gruppe, bestehend aus:
Zirkonmehl, frisch gefälltem Aluminiumhydroxid, frisch gefälltem Titandioxid, einer Titandioxid-Kolloiddispersion, Aluminiumhydroxid in Form von Hydrargillit (CAS 21645-51-2) und Titandioxid (CAS 13463-67-7); und
einen zweiten Bestandteil (C2), welcher als ein Stabilisator dient, bestehend aus Kieselsäure, vorzugsweise Kieselsol;
wobei das Beschichtungsmittel (C) einen pH-Wert von < 10 aufweist.

12. Verwendung nach Anspruch 11, **dadurch gekennzeichnet, dass** das Beschichtungsmaterial (C) ferner enthält:
einen dritten Bestandteil (C3), der als ein Beschleuniger dient, bestehend aus einer Komponente, welche ausgewählt ist aus einer Gruppe, bestehend aus:
Zirkoniumcarbonat (CAS 36577-48-7), basischem Zirkoniumhydroxycarbonat (CAS 57219-64-4), basischem Aluminiumhydroxycarbonat (CAS 1339-92-0) und Titancarbonat; und
vorzugsweise nichtmineralische oder organische Bestandteile in einem Massenanteil von weniger als 5 Massenprozent.

## Revendications

1. Procédé de traitement d'un matériau (M), en particulier dans un procédé de production d'un matériau d'isolation (D) ;
dans lequel le procédé comprend au moins les étapes consistant à :
(a) fournir le matériau (M) comme matériau de départ;
dans lequel le matériau (M) contient ou consiste en un matériau végétal broyé, dans lequel le matériau végétal broyé est du jonc qui est Typha angustifolia ou des fibres de bois ;
(b) appliquer un matériau de revêtement inorganique (C) sur le matériau (M), de préférence le revêtement de matériau (M) avec un matériau de revêtement inorganique (C) ;
dans lequel le matériau de revêtement (C) a une valeur de pH < 10; et
(c) sécher le matériau obtenu dans l'étape (b) jusqu'à ce qu'un degré de siccité soit atteint pour être entre la masse constante et 5 % en masse au-dessus de la masse constante, de préférence jusqu'à ce que la masse constante soit atteinte ;
**caractérisé en ce que** le matériau de revêtement (C) a au moins les composés suivants :
un premier composé (C1), qui fonctionne comme une structure de support, constitué d'un composant, choisi dans le groupe constitué de la poudre de zircon, l'hydroxyde d'aluminium fraîchement précipité, le dioxyde de titane fraîchement précipité, une dispersion colloïdale de dioxyde de titane, l'hydroxyde d'aluminium sous forme d'Hydrargillite (CAS 21645-51-2), et le dioxyde de titane (CAS 13463-67-7) ; et
un second composé (C2), qui fonctionne comme un stabilisateur, constitué d'acide silicique, de préférence un sol de silice.

2. Procédé selon la revendication 1, **caractérisé en ce que** l'application à l'étape (b) est réalisée par imprégnation du matériau (M) avec le matériau de revêtement (C), en particulier par immersion du matériau (M) dans le matériau de revêtement (C); ou l'application à l'étape (b) est réalisée par revêtement de tambour.

3. Procédé selon la revendication 1 ou 2, **caractérisé en ce que** le procédé comprend en outre au moins une des étapes consistant à :
(d) appliquer un matériau de liaison (B) sur le matériau obtenu à l'étape (c) ;
(e) laisser durcir ou sécher le matériau obtenu à l'étape (d), jusqu'à ce que le degré de siccité soit compris entre la masse constante et 5 % en masse au-dessus de la masse constante, de préférence jusqu'à ce que la masse constante soit atteinte ; et/ou
(f) adapter, de préférence broyer à la taille, le matériau obtenu à l'étape (e), obtenant ainsi le matériau d'isolation (D).

4. Procédé selon l'une des revendications 1 à 3, **caractérisé en ce que** le matériau de revêtement (C) contient un troisième composé (C3), qui fonctionne comme un accélérateur, constitué d'un composant, choisi parmi le carbonate de zirconium (CAS 36577-48-7), le carbonate de zirconium hydraté de base (CAS 57219-64-4), le carbonate d'aluminium hydraté de base (CAS 1339-92-0), et le carbonate de titane.

5. Procédé selon la revendication 3, **caractérisé en ce que** le matériau de liaison (B) contient au moins un des composés suivants :
une dispersion aqueuse de polymère à base de latex;
une colle à bois, de préférence à base d'acétate de polyvinyle, en particulier selon la norme DIN/EN 204 (D3) ;
magnésite ;
de la bakélite ;
une résine PFU ; et/ou
une résine de mélamine.

6. Matériau,
de préférence fabriqué par le procédé selon l'une des revendications 1 à 5 ; dans lequel le matériau contient :
un matériau végétal broyé ;
un matériau de revêtement inorganique (C) ; et
de préférence un matériau de liaison (B) ;
dans lequel le matériau végétal broyé est du jonc qui est Typha angustifolia ou des fibres de bois ; et
dans lequel le matériau de revêtement (C) a une valeur de pH inférieure à 10 ;
**caractérisé en ce que** le matériau de revêtement (C) a au moins les composés suivants :
un premier composé (C1), qui fonctionne comme une structure de support, constitué d'un composant, choisi dans le groupe constitué par la poudre de zircon, l'hydroxyde d'aluminium fraîchement précipité, le dioxyde de titane fraîchement précipité, une dispersion colloïdale de dioxyde de titane, l'hydroxyde d'aluminium sous forme d'Hydrargillite (CAS 21645-51-2), et le dioxyde de titane (CAS 13463-67-7) ; et
un second composé (C2), qui fonctionne comme un stabilisateur, constitué d'acide silicique, de préférence un sol de silice.

7. Matériau selon la revendication 6, **caractérisé en ce que** le matériau de revêtement (C) contient un troisième composé (C3), qui fonctionne comme un accélérateur, constitué d'un composant, choisi dans le groupe constitué de : carbonate de zirconium (CAS 36577-48-7), carbonate de zirconium hydraté de base (CAS 57219-64-4), carbonate d'aluminium hydraté de base (CAS 1339-92-0), et carbonate de titane.

8. Matériau selon l'une des revendications 6 ou 7, **caractérisé en ce que** le matériau de liaison (B) contient au moins un des composés suivants :
une dispersion aqueuse de polymère à base de latex;
une colle à bois, de préférence à base d'acétate de polyvinyle, notamment selon la norme DIN/EN 204 (D3) ;
magnésite ;
bakélite ;
une résine PFU ; et/ou
une résine de mélamine.

9. Matériau de revêtement (C) pour le traitement, en particulier le revêtement, d'un matériau (M), de préférence dans un procédé de fabrication d'un matériau d'isolation (D) ;
dans lequel le matériau (M) contient ou consiste en un matériau végétal broyé, de préférence du jonc qui est Typha angustifolia;
dans lequel le matériau de revêtement (C) contient au moins les composés suivants :
un premier composé (C1) qui fonctionne comme une structure de support, constitué d'un composant, choisi dans le groupe constitué de la poudre de zircon, l'hydroxyde d'aluminium fraîchement précipité, le dioxyde de titane fraîchement précipité, une dispersion colloïdale de dioxyde de titane, l'hydroxyde d'aluminium sous forme d'Hydrargillite (CAS 21645-51-2), et le dioxyde de titane (CAS 13463-67-7) ;
un deuxième composé (C2), qui fonctionne comme un stabilisateur, constitué d'acide silicique, de préférence un sol de silice ; et
un troisième composé (C3), qui fonctionne comme un accélérateur, constitué d'un composant, choisi dans un groupe constitué de : le carbonate de zirconium (CAS 36577-48-7), le carbonate de zirconium hydraté de base (CAS 57219-64-4), le carbonate d'aluminium hydraté de base (CAS 1339-92-0), et le carbonate de titane ;
dans lequel le matériau de revêtement (C) a une valeur de pH inférieure à 10.

10. Matériau de revêtement (C) selon la revendication 9, **caractérisé en ce que** le matériau de revêtement (C) contient des composés non minéraux ou organiques dans une proportion massique inférieure à 5 % en masse, de préférence inférieure à 2 % en masse, de préférence inférieure à 1 % en masse, de préférence inférieure à 0,5 % en masse, en particulier inférieure à 0,1 % en masse.

11. Utilisation d'un matériau de revêtement (C) pour le revêtement d'un matériau (M) afin d'empêcher l'absorption d'eau par le matériau (M) et d'obtenir une conductivité thermique du matériau revêtu (M) inférieure à 45 mW/(m·K), de préférence dans un procédé de fabrication d'un matériau d'isolation (D) ;
dans lequel le matériau (M) contient un matériau végétal, de préférence du jonc qui est Typha angustifolia ;
dans lequel le matériau végétal est broyé ; et
dans lequel le matériau de revêtement (C) contient au moins les composés suivants :
un premier composé (C1), qui fonctionne comme une structure de support, constitué d'un composant, choisi dans le groupe constitué de la poudre de zircon, l'hydroxyde d'aluminium fraîchement précipité, le dioxyde de titane fraîchement précipité, une dispersion colloïdale de dioxyde de titane, l'hydroxyde d'aluminium sous forme d'Hydrargillite (CAS 21645-51-2), et le dioxyde de titane (CAS 13463-67-7) ; et
un second composé (C2), qui fonctionne comme un stabilisateur, consistant en acide silicique, de préférence un sol de silice ;
dans lequel le matériau de revêtement (C) a une valeur de pH inférieure à 10.

12. Utilisation selon la revendication 11, **caractérisée en ce que** le matériau de revêtement (C) contient en outre :
un troisième composé (C3), qui fonctionne comme un accélérateur, constitué d'un composant, choisi dans un groupe constitué de : la carbonate de zirconium (CAS 36577-48-7), le carbonate de zirconium hydraté de base (CAS 57219-64-4), le carbonate d'aluminium hydraté de base (CAS 1339-92-0) et le carbonate de titane ; et
de préférence, des composés non minéraux ou organiques dans une proportion massique inférieure à 5 % en masse.
